# EUROPEAN PATENT SPECIFICATION

(11) **EP 2 661 972 B1**
(45) Date of publication and mention of the grant of the patent: **25.11.2015**
(21) Application number: 13002339.3
(22) Date of filing: 02.05.2013
(51) Int. Cl.: A41D 13/08

(54) **Protective cushion**
Schutzkissen
Coussin de protection

(30) Priority: 07.05.2012 HU 1200108
(43) Date of publication of application: 13.11.2013
(73) Proprietor: Sebö, Gyula, 2310 Szigetszentmiklós (HU)
(72) Inventor: Sebö, Gyula, 2310 Szigetszentmiklós (HU)

(56) References cited:
- DE-A1-102007 029 240
- DE-U1-202013 003 259
- GB-A- 2 263 621
- US-A- 3 902 196

## Description

The invention relates to a protective cushion that allows attachment to, use on protective sleeves used in the training of service dogs with a width adjustable according to the wear and tear, elongation of the material.

Most service dogs, within that dogs employed as "assault" dogs in counter-terrorist units, and/or sports dogs are trained to bite on the arm of the person to be detained. The training equipment most commonly used for this purpose is a protective sleeve that a training assistant pulls on his own arm during the training. This equipment is usually made of plastic, covered with leather and/or textile fabric, and has a so called bite surface that is optimal for dogs to bite on. This surface is located between the elbow and the wrist when the training assistant pulls the equipment on his arm. The trainer directs the bite of the dog there during the training. The protective sleeve should have a replaceable protective cover to protect the protective sleeve from the teeth of the dog. The protective sleeve usually consists of two portions connected to each other, a forearm portion with a bite surface, and a shoulder pad. The bite surface of the protective sleeve is the area most exposed to stress. The primary role of the shoulder pad is to protect the shoulder of the trainer, furthermore it helps to keep the sleeve securely in place.

In the prior art several such devices are in use, which should have a protective cover in all cases, sewn in the form of a tube on the forearm portion of the protective sleeve, while open on the shoulder pad portion of the protective sleeve. The contour of the protective cover is bordered by a sewn edge line, fixing together the outer fabric resistant to the teeth of the dog, the inner reinforcement, and the inner covering that is in direct contact with the protective sleeve. The shoulder pad portion of the protective cover has closing/fixing elements and a strap for fixing it on the shoulder pad portion of the protective sleeve. The protective cover can be pulled on the protective sleeve from the direction of the forearm portion and fixed on the shoulder pad portion with a strap. The width of the protective cover, sewn in the form of a tube on the forearm portion of the protective sleeve, corresponds to the width of the commonly produced protective sleeves. As a general rule, the installed protective cover should not move freely, slide on the bite portion, however it should be wide enough to allow installation by pulling on. Accordingly, a perfect protective cover fitting the protective sleeves of all manufacturers does not exist, although the makers work on the basis of similar patterns.

The DE 20 2013 003259 utility model discloses a protective cover of adjustable size for protective arms, where the protective cover has at least two fastening straps on its longitudinal edge line.

In general it can be stated that the protective cover is in all cases a rectangular device and/or has at least one rounded corner, with an outer fabric made of natural jute or cotton, reinforced with synthetic fibres. The bite surface is thicker, with an inner padded reinforcement. During the training the fabric material of the bite surface loosens, the width of the protective cover gets unfavourably elongated and needs to be replaced, while the other parts of the protective cover remain in like-new condition. The inner reinforcement of the protective cover is covered by an inner covering. The inner covering is in direct contact with the protective sleeve. If the inner reinforcement and the inner covering are punctured, the protective sleeve gets damaged. However, the wear and tear of the inner covering becomes visible only if the user performs a complicated procedure for the removal of the whole protective cover.

In the prior art there is no device, protective cushion that is attachable in a releasable manner to a protective cover, within that to the forearm portion of a protective cover used on protective sleeves.

With this invention the task is to prepare a protective cushion covering the forearm portion of the protective cover of protective sleeves, attachable to the protective cover with a fixing element in a releasable manner in order to spare the forearm portion of the protective cover and the protective sleeve under it from the teeth of the dog. When used properly, the protective cover shoulder pad portion and the protective cover edge line age very slowly, almost in parallel with the protective sleeve. The replacement of the whole protective cover, with that the protective cover shoulder pad portion, is costly and unnecessary, furthermore complicated. The protective cushion should be attachable to the protective cover irrespective of whether the protective cover is fixed on the protective sleeve in a releasable or an unreleasable manner.

The aim of the invention is to develop a protective cushion attachable to the forearm portion of a protective cover, which can be adjusted tighter according to the elongation of the outer fabric of the protective cushion by means of at least one fastening strap and a hook and loop fastener fixing element fixed on the inner covering, and can be easily replaced when the protective cushion gets worn and torn. The aim is to ensure that, instead of the whole protective cover or the whole protective sleeve, only the protective cushion covering the forearm portion of the protective cover and exposed to high stress needs to be replaced.

Thus the invention relates to a protective cushion to be used in dog training, having an outer and an inner covering, made of a material reinforced with synthetic fibres, furthermore bordered by a sewn edge line.

The essence of the development is that the inner covering of the protective cushion bordered by an edge line is covered at least partially by a protective cushion hook and loop fastener fixing element, furthermore at least one fastening strap is fixed in the protective cushion edge element, extending beyond it.

Most preferably the protective cushion hook and loop fastener fixing element covers minimum 25% of the protective cushion inner covering.
The length of the widest side of the protective cushion is maximum 50 cm.

The invention is illustrated in the following figures:
- Figure 1 shows a protective cover known in the prior art, installed on a protective sleeve having a shoulder pad.
- Figure 2 shows the protective cushion according to the invention with open fastening straps.
- Figure 3 shows the protective cushion according to the invention in a semi-open state, installed on a known protective cover in such a way that a protective cover hook and loop fastener counterpart is fixed on the known protective cover.
- Figure 4 shows the A-A cross-section according to Figure 3, showing the inner structure of the protective cover and the protective cushion.

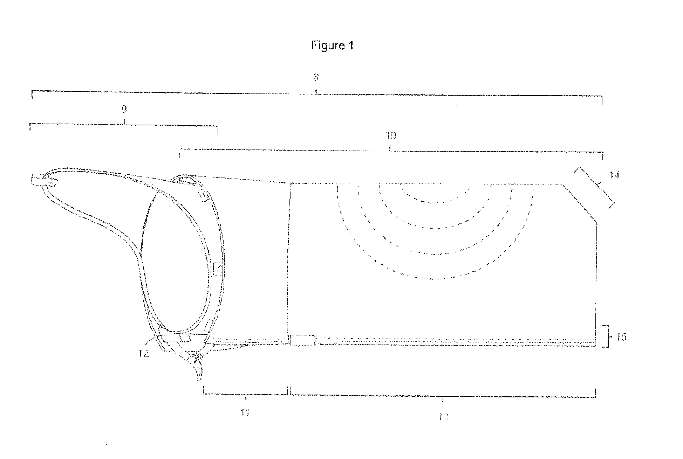

Figure 1 shows a known protective cover **10** fixed on the protective sleeve shoulder pad portion **9** of a protective sleeve **8** by means of protective cover shoulder pad portion fixing elements **12** on the protective cover shoulder pad portion **11**. The known protective cover **10** is bordered by a protective cover edge line **15** made by sewing. The protective cover forearm portion **13** is bordered on one end by the protective cover shoulder pad portion **11**, while on the other end by a protective cover end element **14**.

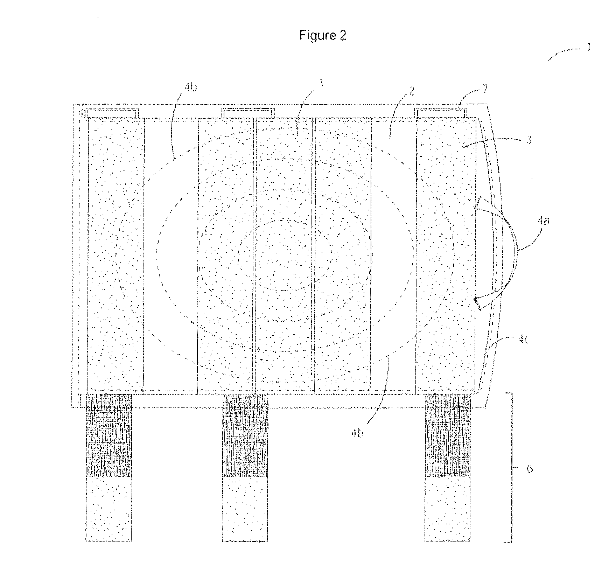

Figure 2 shows the protective cushion **1** with open fastening straps **6**, in a spread-out state. The protective cushion **1** is bordered by a protective cushion edge element **4c**, in which on the side opposite to the fastening straps **6** most preferably strap adjuster elements **7** are fixed by sewing, through which the fastening straps **6** can be passed and closed on themselves by means of hook and loop fasteners. Most preferably there are minimum 3 strap adjuster elements **7** and fastening straps **6**, one at the side of the protective cushion end element **4a**, one in the middle, and one at the side opposite to the protective cushion end element **4a**. A protective cushion hook and loop fastener fixing element **3** is fixed on the protective cushion inner covering **2** in at least three rows, covering minimum 25% of the protective cushion inner covering **2**. Most preferably the protective cushion hook and loop fastener fixing element **3** covers 60-80% of the protective cushion inner covering **2**, running between the fastening straps **6** and the strap adjuster elements **7** at side of the protective cushion end element **4a** and at the side opposite to it, as well as between the two. The protective cushion hook and loop fastener fixing element **3** is fixed on the protective cushion inner covering **2** by sewing and gluing. The protective cushion hook and loop fastener fixing element **3** is also fixed by the protective cushion seams **4b**.

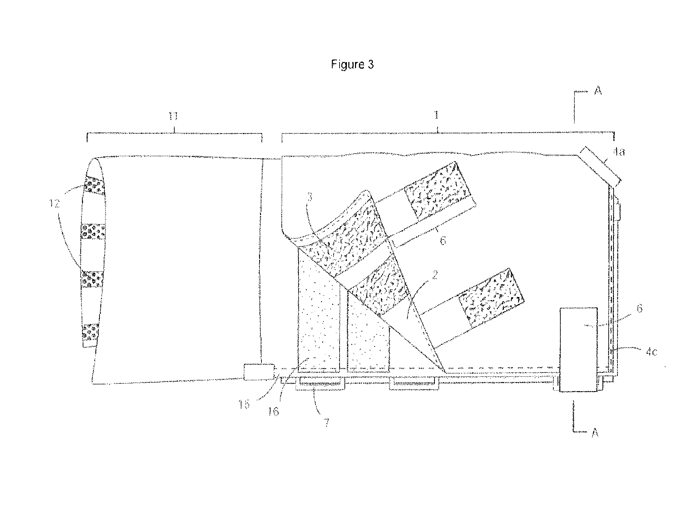

Figure 3 shows a further developed embodiment of the known protective cover **10** shown in Figure 1, with a protective cover hook and loop fastener counterpart **16** where the protective cushion **1** is attached, leaving the protective cover shoulder pad portion **11** free. Two of the fastening straps **6** and strap adjuster elements **7** on the protective cushion **1** are shown in an open state, with a foldback showing the protective cushion hook and loop fastener fixing element **3** fixed on the protective cushion inner covering **2**. The releasable attachment of the protective cover hook and loop fastener counterpart **16** and the protective cushion hook and loop fastener fixing element **3** allows adhesion and adjustment, as well as easy removal and installation. The protective cover hook and loop fastener counterpart **16** preferably ends at the protective cover edge line **15**. The protective cushion **1** is bordered by the protective cushion edge element **4c**, preferably made by sewing down the folded back material and/or an edging strip, and ending in the protective cushion end element **4a**. There are protective cover shoulder pad portion fixing elements **12** on the protective cover shoulder pad portion **11**.

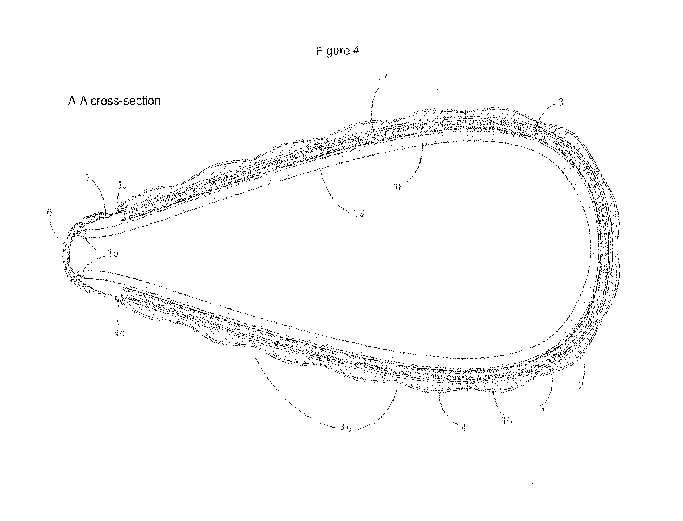

Figure 4 shows the A-A cross-section, showing the protective cover hook and loop fastener counterpart **16**, fixed on the protective cover outer fabric **17**, and the attached protective cushion hook and loop fastener fixing element **3**, fixed on the protective cushion inner covering **2**. There is a protective cushion intermediate layer **5** between the outer covering fabric **4** and the protective cushion inner covering **2**, and they are fixed together by at least the protective cushion seams **4b**. There is a protective cover inner reinforcement **18** between the protective cover outer fabric **17** and the protective cover inner covering **19**, and the layers are bordered by the protective cover edge line **15**. Strap adjuster elements **7** are fixed between the outer covering **4** and the protective cushion inner covering **2**, extending beyond the protective cushion edge element **4c**. On the side opposite to the strap adjuster elements **7**, fastening straps **6** are fixed in the protective cushion edge element **4c**, extending beyond it, and fastened to the strap adjuster elements **7**.

The protective cushion provides a solution for the long-term use and adjustable attachment of protective covers. The fastening straps of the protective cushion and the hook and loop fastener fixing element also fix the protective cover itself firmly on the protective sleeve. Thereby it is always tightly fixed even on protective sleeves of different designs.

### List of reference numbers

**1)** protective cushion
**2)** protective cushion inner covering
**3)** protective cushion hook and loop fastener fixing element
**4)** outer covering
**4a)** protective cushion end element
**4b)** protective cushion seams
**4c)** protective cushion edge element
**5)** protective cushion intermediate layer
**6)** fastening strap
**7)** strap adjuster element
**8)** protective sleeve
**9)** protective sleeve shoulder pad portion
**10)** known protective cover
**11)** protective cover shoulder pad portion
**12)** protective cover shoulder pad portion fixing element
**13)** protective cover forearm portion
**14)** protective cover end element
**15)** protective cover edge line
**16)** protective cover hook and loop fastener counterpart
**17)** protective cover outer fabric
**18)** protective cover inner reinforcement
**19)** protective cover inner covering

## Claims

1. A protective cushion (1) to be used in dog training, having an outer (4) and an inner (2) covering, made of a material reinforced with synthetic fibres, furthermore bordered by a sewn edge line, and at least one fastening strap (6) is fixed in the protective cushion edge element (4c), extending beyond it, **characterized in that** the inner covering **(2)** of the protective cushion **(1)** bordered by an edge line is covered at least partially by a protective cushion hook and loop fastener fixing element **(3).**

2. The protective cushion **(1)** according to claim 1, **characterized in that** the protective cushion hook and loop fastener fixing element **(3)** covers minimum 25% of the protective cushion inner covering **(2)**.

3. The protective cushion **(1)** according to claims 1-2, **characterized in that** the length of the widest side of the protective cushion **(1)** is maximum 50 cm.

4. A protective cover (10) with a protective cushion **(1)** to be used in dog training according to any of the preceding claims, **characterized in that** the protective cushion hook and loop fastener fixing element **(3)** of the protective cushion **(1)** is releasably attachable to a protective cover hook and loop fastener counterpart **(16)** fixed on the forearm portion of the protective cover **(10).**

5. A protective sleeve **(8)** having a protective cover **(10)** with a protective cushion **(1)** to be used in dog training according to claim 4, fixed thereto.

## Patentansprüche

1. Ein Schutzkissen **(1)** zur Verwendung für Hundeausbildung, das eine äußere **(4)** und innere **(2)** Hülle hat, aus einem mit synthetischen Fasern verstärkten Material besteht und außerdem von einer genähten Kantenlinie umsäumt wird und bei dem mindestens ein Befestigungsgurt **(6)** an dem Kantenelement des Schutzkissens befestigt ist **(4c),** welcher über das Kissen hinausragt, **dadurch gekennzeichnet, dass** die innere Hülle **(2)** des von einer Kantenlinie umsäumten Schutzkissens **(1)** zumindest teilweise von einem Klettverschlussbefestigungselement des Schutzkissens **(3)** bedeckt wird.

2. Schutzkissen **(1)** nach Anspruch 1, **dadurch gekennzeichnet, dass** das Klettverschlussbefestigungselement des Schutzkissens **(3)** mindestens 25 % der inneren Hülle **(2)** des Schutzkissens bedeckt.

3. Schutzkissen **(1)** nach Anspruch 1 oder 2, **dadurch gekennzeichnet, dass** die Länge der breitesten Seite des Schutzkissens **(1)** höchstens 50 cm beträgt.

4. Schutzhülle **(10)** mit einem Schutzkissen **(1)** zur Verwendung für Hundeausbildung nach allen oben aufgeführten Ansprüchen, ***dadurch gekennzeichnet,* dass** das zum Schutzkissen **(1)** gehörende Klettverschlussbefestigungselement des Schutzkissens **(3)** abnehmbar an einem Gegenstück zum Klettverschluss des Schutzkissens **(16)** befestigt werden kann, welches am Unterarmteil der Schutzhülle **(10)** befestigt ist.

5. Der Schutzärmel **(8)** hat eine Schutzhülle **(10)** mit einem Schutzkissen **(1)** zur Verwendung für Hundeausbildung nach Anspruch 4, die an ihm befestigt ist.

## Revendications

1. Un coussin de protection **(1),** habituellement utilisé pour le dressage de chiens, ayant un revêtement intérieur **(2)** et extérieur **(4),** fait à partir d'un matériau renforcé avec des fibres synthétiques, également bordé par une ligne de couture , et au moins une sangle d'attache **(6)** est fixée à l'élément situé à l'extrémité du coussin de protection **(4c),** s'étendant au-delà de celui-ci, se **caractérise par le fait que** le revêtement intérieur **(2)** du coussin de protection **(1)** délimité par une ligne cousue sur son contour, est recouvert au moins partiellement par un crochet de coussin de protection et un élément de fixation par une attache à boucle **(3).**

2. Selon la revendication 1, le coussin de protection **(1), caractérisé par le fait que** le crochet du coussin de protection et l'élément de fixation par une attache à boucle **(3)** recouvrent au minimum 25% du revêtement intérieur **(2)** du coussin de protection.

3. Selon les revendications 1 et 2, le coussin de protection **(1)** se **caractérise par le fait que** la longueur du côté le plus large du coussin de protection **(1)** mesure maximum 50 cm.

4. Une couverture de protection **(10)** avec un coussin de protection **(1),** habituellement utilisée pour le dressage de chiens, selon n'importe laquelle des réclamations précédentes, **caractérisée par le fait que** le crochet du coussin de protection **(1)** et l'élément de fixation par une attache à boucle du coussin de protection **(3)** sont fixés de façon amovible à l'équivalent du crochet et de l'attache à boucle de la couverture de protection **(16),** fixé sur la partie de l'avant-bras de la couverture de protection **(10).**

5. Un manchon de protection **(8)** ayant une couverture de protection **(10),** complété d'un coussin de protection **(1),** habituellement utilisé pour le dressage de chiens, selon la revendication 4, fixe celui-ci.
